# EUROPÄISCHE PATENTANMELDUNG

(11) **EP 1 342 703 A2**
(43) Veröffentlichungstag der Anmeldung: **10.09.2003**
(21) Anmeldenummer: 03004736.9
(22) Anmeldetag: 04.03.2003
(51) Int. Cl.: C04B 38/00

(54) **Verfahren zum Herstellen eines Formkörpers aus Kohlenstoffmaterial**

(30) Priorität: 04.03.2002 DE 10209223
(71) Anmelder: Schunk Kohlenstofftechnik GmbH, D-35452 Heuchelheim (DE)
(72) Erfinder: Kehr, Dietrich, Dr., 35444 Biebertal (DE); Nebelung, Manfred, Dr., 01309 Dresden (DE); Siegel, Stefan, Dr., 01189 Dresden (DE)
(74) Vertreter: Stoffregen, Hans-Herbert, Dr. Dipl.-Phys.

(57) **Zusammenfassung**

Die Erfindung bezieht sich auf ein Verfahren zur Herstellung eines Formkörpers aus Kohlenstoffmaterial. Hierzu werden Grünkörper durch Beschichten eines durch Wärmebehandlung entfernbaren Trägerkörpers mit Kohlenstoffmaterial hergestellt, die in eine Form. deren Innengeometrie Außengeometrie des herzustellenden Formkörpers entspricht, eingebracht und sodann wärmebehandelt werden.

## Beschreibung

Die Erfindung bezieht sich auf ein Verfahren zur Herstellung eines Formkörpers aus Kohlenstoffmaterial.

Aus der US 5,888,469 sind Hohlkörper aus Kohlenstoffschaum bekannt. Dabei wird bituminöse Kohle hydriert und entascht, sodann die hydrierte bituminöse Kohle in einem Lösungsmittel in Asphalt und Öle überführt, die Asphalte sodann von den Ölen entfernt und bei einer Temperatur zwischen 325 °C und 500 °C über einen Zeitraum von 10 Min. bis 8 Stunden bei einem Druck von in etwa 15 bis 15.000 psig zum Entfernen flüchtiger Bestandteile verkokt.

Andere Verfahren zur Herstellung von Kohlenstoffschaum, also zur Ausbildung von aus Kohlenstoffmaterial bestehenden Hohlkörpern sind der US 3,342,555 oder der EP 0 543 752 B1 zu entnehmen.

Aus der DE 199 29 760 A1 sind ein Verfahren und eine Einrichtung zur Herstellung metallischer, oxidischer oder keramischer Hohlkugeln bekannt. Dabei wird auf ein aus Polystyrol bestehendes kugelförmiges Trägerelement ein flüssiges bis pastöses Bindemittel aufgebracht und sodann gesondert mindestens ein trockener, pulver- oder granulatförmiger Ausgangsstoff zur Ausbildung einer Hüllschicht zugeführt. Bei dem Auftragen ist das Trägerelement in Bewegung versetzt. Die Polystyrolkugeln selbst weisen einen mittleren Durchmesser von 4,5 mm auf. Das Trägermaterial wird sodann durch Pyrolyse entfernt. Damit die fertige Hohlkugel eine gewünschte spezifische Porösität aufweist, können dem Bindemittel oder dem Ausgangsstoff spezifische Platzhalter zugemischt werden, die später ähnlich dem Material des Trägerelementes pyrolytisch entfernt werden. Als derartige Platzhalter können beispielsweise organische Stoffe wie ein Granulat aus Graphit, Harnstoff oder Polystyrol mit einem Durchmesser zwischen etwa 50 µm und 500 µm eingesetzt werden.

Die DE 22 43 065 A1 bezieht sich auf ein Verfahren zur Herstellung von Hohlkörpern. Hierzu wird ein Trägerkörper z. B. aus Polystyrol bestehend mit einem Kohlenstoff enthaltenden Überzug versehen, um anschließend gesintert zu werden. Bei der Wärmebehandlung wird der Trägerkörper entfernt. Die einzeln hergestellten Hohlkörper können als Füllstoffmaterial für Öfen, Füllstoff für Baumaterialien, als Aktivkohle, als Sequestrierungsmittel für Verunreinigungen auf Wasseroberflächen oder als Material zur Verhinderung des Verdampfens von flüssigen Materialien benutzt werden.

Der vorliegenden Erfindung liegt das Problem zu Grunde, ein Verfahren zur Herstellung eines Formkörpers aus Kohlenstoffmaterial zur Verfügung zu stellen, der starken mechanischen Beanspruchungen standhält, hohen Temperaturen aussetzbar ist und mit einfachen Maßnahmen gewünschte Geometrien erhalten kann.

Zur Lösung des Problems wird erfindungsgemäß im Wesentlichen vorgeschlagen,
- Herstellen von Grünkörpern durch Beschichten eines durch Wärmebehandlung entfernbaren Trägerkörpers mit Kohlenstoffmaterial und/oder durch Wärmeeinwirkung in Kohlenstoff sich zumindest teilweise umwandelndes Material,
- Einbringen der Grünkörper in eine Form, deren Innengeometrie zumindest bereichsweise Außengeometrie des herzustellenden Formkörpers entspricht,
- Wärmebehandlung der Grünkörper derart, dass die Trägerkörper entfernt werden und sich ausbildende Hohlkörper zusammenhaften,
- Abkühlen der Hohlkörper und anschließendes Entfernen aus der Form.

Erfindungsgemäß wird ein Formkörper aus aus Kohlenstoff bestehenden Hohlkörpern zur Verfügung gestellt, wobei die Hohlkörper selbst nur eine geringe Streuung aufweisen. Hierdurch ergeben sich Formkörper gewünschter mechanischer und thermischer Eigenschaften, die über den gesamten Formkörper gleichbleibend sind.

Insbesondere ist vorgesehen, dass die zusammenhaftenden den Formkörper bildenden aus Kohlenstoff bestehenden Hohlkörper kaschiert werden, wobei vorzugsweise zumindest eine Fläche des aus den Hohlkugeln bestehenden Formkörpers z. B. mit einer Kohlenstoff- wie Graphitfolie kaschiert wird.

Dabei kann der Formkörper quader-, flachstab- oder scheibenförmig ausgebildet sein, wobei vorzugsweise gegenüberliegenden Flächen kaschiert werden.

Insbesondere durch Pyrolysieren erfolgt eine Wärmebehandlung, um einerseits den Trägerkörper zu entfernen und andererseits die aus Kohlenstoff bestehenden Hohlkörper untereinander zu verbinden, um den Formkörper gewünschter Geometrie zu erhalten. Vorzugsweise erfolgt ein Sintern, um quasi ein Zusammenkleben der Hohlkörper zu erreichen.

Insbesondere wird zur Herstellung der Hohlkörper mesophasenenthaltender Kohlenstoff oder eine diesen enthaltende Mischung verwendet. Hierdurch ergibt sich eine gute Festigkeit und Wärmeleitfähigkeit bis ca. 50 W/m K der entsprechenden Hohlkugeln.

Alternativ besteht die Möglichkeit, dass als Kohlenstoff rußhaltiger Kohlenstoff oder eine diesen enthaltende Mischung verwendet wird, so dass sich Hohlkugeln mit geringer Wärmeleitfähigkeit kleiner 1 W/m K ergeben, die als Isolatoren zum Einsatz gelangen können. Mit dem gleichen Ziel sind als Rohstoff teilpyrolysierte Naturfasern einsetzbar.

Insbesondere ist vorgesehen, dass die mit der Suspension zu beschichtenden Trägerkörper arteigene Mittel enthalten, also z. B. Kleber, Harze oder Siloxane, die bei der Wärmebehandlung bzw. Pyrolyse thermisch zersetzt und als Kohlenstoffmaterial wirksam werden.

Die Suspension kann des Weiteren natürlichen oder synthetischen Kohlenstoff und andere nichtmetallische bzw. nichtkeramische Rohstoffe enthalten, die durch Sintern oder andere Verfahren verfestigt werden können.

Ein Einsatz von teilpyrolysierten und insbesondere, vorwiegend ausschließlich zerkleinerten Naturfasern als Bestandteile der Suspension ist gleichfalls möglich.

Als Beschichtung bzw. Beschichtungsmaterial kann auch Phenolharz verwendet werden.

Nach einem weiteren Vorschlag der Erfindung kann während oder nach der Ausbildung der Hohlkörper bzw. des Formkörpers eine externe oder interne Infiltrierung mit arteigenen Materialien erfolgen. Dies kann z. B. durch Beschichtung oder Tränkung oder Einbettung oder CVI oder dadurch realisiert werden, dass der Trägerkörper aus kohlenstoffhaltigem Rohstoff in disperser Form besteht, der bei der Wärmebehandlung nicht pyrolysiert, sondern nach dem Schmelzen durch die poröse Schale sorbiert und beim Tempern in Kohlenstoff umgewandelt wird. Hierdurch ergibt sich eine Verstärkung der Struktur und eine Erhöhung der Dichte des Hohlkörpers.

Zur externen oder internen Infiltrierung mit arteigenen Materialien während und/oder nach der Formgebung ist ergänzend Folgendes auszuführen.

Bei der Beschichtung wird eine poröse Schale erzeugt, deren Porosität die Festigkeit und die Wärmetransportkoeffizienten stark beeinflusst. Die Verringerung dieser Porosität kann erfolgen durch:
- Sintern mit gleichzeitiger Schwindung;
- Tempern unterhalb der Sintertemperatur des Kohlenstoffs, aber oberhalb der Schmelztemperatur von kohlenstoffhaltigen Einbettmaterialien, die flüssig durch die Porosität aufgenommen wird;
- Tränken der Hohlkugeln mit einer Suspension mit nachfolgender Trocknung und Konsolidierung des eingebrachten Feststoffes;
- Verwendung von kohlenstoffhaltigen Keimen, die während des Sintervorganges eine flüssige Phase durchlaufen und dabei in die Porosität der Schale diffundieren.

Als weitere Möglichkeit ist vorgesehen, dass als Material für den Trägerkörper hochschmelzendes disperses Material wie z. B. Silizium eingesetzt wird, das nach dem Sintern der den Hohlkörper bildenden Kohlenstoffschale durch Infiltration der Porosität zu einer Verstärkung und unter definierten Bedingungen zu einer Reaktion der Komponenten (wie z. B. SiC) führt. Alternativ oder ergänzend kann der Trägerkörper Si enthalten.

Ein weiterer Erfindungsgedanke sieht den Einbau von Halbkugeln in eine Matrix als definierte - aber statistisch verteilte - Priorität.

Die Hohlkugeln haben im konfektionierten Zustand definierte Strukturen (Porosität, Hohlraum) und Eigenschaften. Durch Einmischen dieser Kugeln in andere sinterfähige Stoffsysteme können gezielt die Eigenschaften der damit hergestellten gesinterten Formkörper eingestellt werden. Durch die Mischprozesse können die Kugeln nicht regelmäßig angeordnet werden. Daraus resultiert die verwendete Formulierung über die Art der Verteilung der Porosität, nämlich statistische Verteilung.

Zu den Trägerkörpern ist anzumerken, dass insbesondere solche aus einem Styropor oder Polyurethan-Material verwendet werden. Auch andere Materialien für die Trägerkörper können eingesetzt werden, sofern diese einerseits pyrolysierbar sind und andererseits beim Erwärmen auf den auszubildenden Hohlkörper keine Kräfte derart übertragen, dass diese zerstört werden können. Insbesondere kommen Materialien in Frage, die sich beim Erwärmen in ihrem Volumen nicht verändern oder sogar verringern.

Dabei sollten die Trägerkörper bevorzugterweise eine rotationssymmetrische Geometrie aufweisen, wobei Trägerkörper mit einer Geometrie einer Kugel, eines Ellipsoids bevorzugt anzugeben sind.

Insbesondere werden Trägerkörper in Form einer Kugel mit einem Außendurchmesser DA mit 10mm ≥ D_{A} ≥ 0,5mm, insbesondere D_{A} in etwa 1mm verwendet. Dabei werden die Trägerkörper in Form von Kugeln mit einer Suspension derart beschichtet, dass der fertige Hohlkörper eine Wandstärke W_{D} mit 0,2mm ≤ W_{D} ≤ 1,0mm, insbesondere W_{D} ≤ 0,5mm aufweist.

Allgemein sollte der Trägerkörper mit einer Suspension derart beschichtet werden, dass die Wandstärke WD des fertigen Hohlkörpers ≤ 1/2 D_{A} entspricht.

Als Suspension selbst wird eine solche aus kohlenstoffhaltigem Pulver, Wasser sowie ein Verdickungsmittel wie z.B. Polyvinylalkohol verwendet, das zur Viskositätseinstellung dient und geringere Klebeeigenschaften zum intermediären Binden aufweist.

Eine entsprechende Suspension wird in einem üblichen Coating-Verfahren auf den Trägerkörper aufgebracht. Hierzu können Wirbelschichtanlagen, Eirich-Mischer, Turbulentmischer oder sonstige von Coating-Verfahren bekannte Einrichtungen wie Dragierteller in Frage kommen.

Insbesondere sollten die Trägerkörper derart beschichtet werden, dass der jeweilige Hohlkörper eine Dichte ρ ≤ 1g/cm³, insbesondere ρ ≤ 0,7g/cm³, vorzugsweise ρ ≤ 0,6g/cm³ aufweist.

Die entsprechenden Hohlkugeln zeichnen sich insbesondere durch eine geringe spezifische Dichte, hohe Druckfestigkeit, Grafitierbarkeit und Korrosionsfestigkeit aus. Auch kann in Abhängigkeit vom Ausgangskohlenstoffmaterial eine gewünschte Wärmeleitfähigkeit erzielt werden.

Die hergestellten Hohlkugeln werden erfindungsgemäß durch Sintern "zusammengeklebt", d. h. zu dreidimensionalen Bauteilen versintert, wobei eine Geometrievorgabe der zusammenhängigen Hohlkugeln derart erfolgen kann, dass ein Körper mit Außenflächen zur Verfügung steht, der z.B. kaschiert werden kann. Mögliche Körpergeometrien sind beispielsweise Quaderform, Flachstabform oder Scheibenform.

Erfindungsgemäß können erfindungsgemäße Formkörper als Leichtbaukörper, zur Wärme- wie Ofenisolierung, für Gasleitungsrohre, Abdeckungen von Schmelzen, als Filter, als Katalysatorträger oder Elektroden für elektrische Prozesse verwendet werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus den nachfolgenden Ausführungsbeispiele, anhand derer die Herstellung von Hohlkörpern erläutert wird.

### Beispiel 1:

Expandierte Polystyrolschaumkugeln (EPS) mit Durchmessern von in etwa 1 mm wurden in einer Wirbelschichtanlage fluidisiert. Als Schichtmaterial wurde Mesophasen-Kohlenstoff mit einer mittleren Partikelgröße von 5 - 40 µm in Wasser mit einer Binderlösung dispergiert (30 Ma% Feststoffgehalt) und in das Wirbelbett eingesprüht. Nach Erreichen einer Schichtdicke von ca. 0,5 mm wurden die Kugel aus der Anlage entnommen, eine Schüttdichte von 0,24 g/cm³ wurde gemessen.

Nach dem Ausheizen der Binderkomponenten und dem Pyrolysieren der Keime (EPS) bei 500 °C unter Intergas lagen mechanisch stabile Hohlkugeln (Mittelwert 150 N) mit Schalendicken von 400 µm in loser Schüttung vor.

### Beispiel 2:

Die Hohlkugeln nach Beispiel 1 wurden in eine Form wie z. B. Rohr geschüttet und leicht verdichtet. Nach der folgenden Temperung und dem Abkühlen wurde ein mechanisch stabiler Formkörper mit einer Dichte von ca. 0,5g/cm³ entnommen, der mechanisch bearbeitbar war.

### Beispiel 3:

Bei Einlagerung der Hohlkugeln nach Beispiel 1 in eine Form aus arteigenem Material (z. B. Platte oder Pulverbett) konnte durch Temperung/Sintern und Abkühlen ein Formkörper mit einer ebenen, dichten oder porösen Deckstruktur erzeugt werden.

### Beispiel 4:

Bei Einlagerung der Hohlkugeln nach Beispiel 1 in eine Form aus arteigenem Material (z. B. Platte oder Pulverbett) konnte ein Formkörper mit geometrisch definierter ebener und dichter Oberfläche und statistisch verteilter Porosität im Inneren erzeugt werden.

### Beispiel 5:

Als Schichtmaterial wurde in einer wässrigen Suspension eine Mischung aus Mesophasenkohlenstoff (mittlere Partikelgröße < 20 µm) und Ruß (mittlere Partikelgröße < 1 µm) hergestellt. Durch Einstellung verschiedener Mischungsverhältnisse konnten Materialien (Hohlkugeln) und Formkörper mit definierter Warmeleitfähigkeit hergestellt werden.

### Beispiel 6:

Als Keimmaterial wurde ein kohlenstoffhaltiger Rohstoff in disperser Form eingesetzt, der bei der Wärmebehandlung (500 °C) nicht pyrolysiert, sondern nach dem Schmelzen durch die poröse Schale sorbiert und beim Tempern in Kohlenstoff umgewandelt wurde. Damit wurde eine Verstärkung der Struktur und die Erhöhung der Schalendichte erreicht.

### Beispiel 7:

Als Keimmaterial wurde ein hochschmelzendes disperses Material (z. B. Si) eingesetzt, das nach dem Sintem der Kohlenstoffschale durch Infiltration der Porosität zu einer Verstärkung und unter definierten Bedingungen zu einer Reaktion der Komponenten (z. B. zu SiC) führte.

## Patentansprüche

1. Verfahren zur Herstellung eines Formkörpers aus Kohlenstoffmaterial
**gekennzeichnet durch** die Verfahrensschritte
- Herstellen von Grünkörpern **durch** Beschichten eines **durch** Wärmebehandlung entfernbaren Trägerkörpers mit Kohlenstoffmaterial und/oder **durch** Wärmeeinwirkung in Kohlenstoff sich zumindest teilweise umwandelndes Material,
- Einbringen der Grünkörper in eine Form, deren Innengeometrie Außengeometrie des herzustellenden Formkörpers entspricht,
- Wärmebehandlung der Grünkörper derart, dass die Trägerkörper entfernt werden und sich ausbildende Hohlkörper zusammenhaften,
- Abkühlen der Hohlkörper und anschließendes Entfernen aus der Form.

2. Verfahren nach Anspruch 1,
**dadurch gekennzeichnet,**
**dass** die zusammenhaftenden den Formkörper bildenden aus Kohlenstoff bestehenden Hohlkörper kaschiert werden, wobei vorzugsweise zumindest eine Fläche des aus den Hohlkugeln bestehenden Formkörpers z. B. mit einer Kohlenstoff- wie Graphitfolie kaschiert wird.

3. Verfahren nach Anspruch 1 oder 2,
**dadurch gekennzeichnet,**
**dass** der Formkörper quader-, flachstab- oder scheibenförmig ausgebildet wird und vorzugsweise gegenüberliegende Flächen kaschiert werden.

4. Verfahren nach zumindest einem der vorhergehenden Ansprüche,
**dadurch gekennzeichnet,**
**dass** zum Beschichten mesophasenenthaltender Kohlenstoff, rußhaltiger Kohlenstoff oder eine diesen enthaltende Mischung insbesondere in Form einer Suspension verwendet wird.

5. Verfahren nach zumindest einem der vorhergehenden Ansprüche,
**dadurch gekennzeichnet,**
**dass** die Trägerkörper mit einer arteigene Bindemittel wie Kleber-, Harz oder Siloxane enthaltenden Suspension oder einer solchen beschichten werden, die natürlichen und/oder synthetischen Kohlenstoff und nicht metallische oder nichtkeramische Rohstoffe enthalten.

6. Verfahren nach zumindest einem der vorhergehenden Ansprüche,
**dadurch gekennzeichnet**,
das als Trägermaterial für den Trägerkörper Styropor oder Polyurethan oder andere geeignete pyrolysierbare Materialien verwendet werden, wobei als Trägerkörper insbesondere ein solcher mit rotationssymmetrischer Geometrie, mit einer Geometrie einer Kugel, eines Ellipsoides und/oder eines Quaders verwendet wird.

7. Verfahren nach zumindest einem der vorhergehenden Ansprüche,
**dadurch gekennzeichnet,**
**dass** der Träger mit einer Suspension derart beschichtet wie besprüht wird, dass der Hohlkörper eine Wandstärke W_{D} mit 0,2 mm ≤ W_{D} ≤ 1,0 mm, insbesondere W_{D} ≤ 0,5 mm aufweist.

8. Verfahren nach zumindest einem der vorhergehenden Ansprüche,
**dadurch gekennzeichnet,**
**dass** als Trägerkörper eine Kugel mit einem Außendurchmesser D_{A} mit 10 mm ≥ D_{A} ≥ 0,5 mm, insbesondere D_{A} in etwa 1 mm verwendet wird, wobei der Trägerkörper insbesondere mit der Suspension derart beschichtet wird, dass die Wandstärke W_{D} des fertigen Hohlkörpers in etwa oder kleiner ½ D_{A} beträgt.

9. Verfahren nach zumindest einem der vorhergehenden Ansprüche,
**dadurch gekennzeichnet,**
**dass** als Suspension eine solche aus kohlenstoffhaltigem Pulver, Wasser und einem Verdichtungsmittel wie Polyvinylalkohol und organischen oder anorganischen Bindern verwendet wird.

10. Verfahren nach zumindest einem der vorhergehenden Ansprüche,
**dadurch gekennzeichnet,**
**dass** als Trägerkörper ein solcher mit einem Außendurchmesser verwendet und derart beschichtet wird, dass der fertige Hohlkörper eine Dichte ρ < 1g/cm³, insbesondere ρ ≤ 0,7g/cm³, vorzugsweise ρ ≤ 0,6g/cm³ aufweist.

11. Verfahren nach zumindest einem der vorhergehenden Ansprüche,
**dadurch gekennzeichnet,**
**dass** der Trägerkörper mit der Suspension in einer Wirbelschichtanlage, einem Eirich-Mischer oder einem Dragierteller beschichtet wird.

12. Verfahren nach zumindest einem der vorhergehenden Ansprüche,
**dadurch gekennzeichnet,**
**dass** als Material für den Trägerkörper ein kohlenstoffhaltiger Rohstoff, insbesondere in disperser Form verwendet wird, der durch Wärmebehandlung von der Beschichtung adsorbiert und in Kohlenstoff umgewandelt wird, und/oder als Material für den Trägerkörper hochschmelzendes Material wie Si verwendet wird.

13. Verfahren nach zumindest einem der vorhergehenden Ansprüche,
**dadurch gekennzeichnet,**
**dass** als Suspension eine solche mit zumindest teilpyrolysierten Naturfasern verwendet wird.
